# EUROPÄISCHE PATENTSCHRIFT

(11) **EP 3 513 090 B1**
(45) Veröffentlichungstag und Bekanntmachung des Hinweises auf die Patenterteilung: **01.01.2020**
(21) Anmeldenummer: 17761876.6
(22) Anmeldetag: 05.09.2017
(51) Int. Cl.: F16D 65/56, F16D 125/52, F16D 127/06, F16D 129/08, F16D 129/10

(54) **STELLEINHEIT FÜR TROMMELBREMSEN**
ACTUATING UNIT FOR DRUM BRAKES
UNITÉ DE RÉGLAGE POUR FREINS À TAMBOUR

(30) Priorität: 16.09.2016 DE 102016117449
(43) Veröffentlichungstag der Anmeldung: 24.07.2019
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2017/072246
(87) Internationale Veröffentlichungsnummer: WO 2018/050492

(56) Entgegenhaltungen:
- WO-A1-2015/159591
- DE-A1- 1 903 560
- GB-A- 469 911

## Beschreibung

Die vorliegende Erfindung betrifft eine Stelleinheit, insbesondere eine Rückstell- oder Nachstelleinheit und/oder eine Rückstelleinheit zum Einsatz in einer Trommelbremse.

Nachstell- und Rückstelleinheiten sind aus dem Stand der Technik bereits bekannt. So werden verschiedene Nachstell- und Rückstellsysteme verwendet, um bei Verschleiß von Belagelementen eines Bremssystems zu verhindern, dass der Betätigungsweg bis zum Anliegen der Bremsbeläge an der jeweiligen Bremsbacke oder Bremsscheibe zu lang wird. Es hat sich dabei gezeigt, dass sehr aufwendige Mechaniken erforderlich sind, um ein reibungsloses Betätigen der Scheibenbremse oder Trommelbremse bei gleichzeitig permanent stattfindender Nachstellung zu gewährleisten. Dabei sorgt eine Vielzahl von Federelementen, zahnartigen Eingriffselementen und entsprechenden Übertragungswellen für die Nachstellung im laufenden Betrieb der Bremseinheit, wobei die Vielzahl von sehr filigranen Bauteilen mitunter fehleranfällig ist und auch die Wartung der Nachstelleinheit aufgrund der Vielzahl von Einzelteilen sehr aufwendig ist. Ein weiterer Lösungsansatz ist eine elektrische Betätigung der Nachstellung, insbesondere über einen in ein Kolbenelement integrierten Elektromotor. Auch dieses System ist aber durch seine integrierte Anordnung des Elektromotors zu Wartungszwecken nur schwer zu erreichen und es sind aufwendige Schleifkontaktanordnungen erforderlich, um die Stromversorgung des Elektromotors zu gewährleisten.

Die WO 2015/159591 A1 offenbart ein Bremssystem mit einer hydraulisch betriebenen Betriebsbremse und einer elektrisch angetriebenen Parkbremse, wobei die Parkbremse über ein Schraubgewinde das Drehmoment eines Elektromotors in eine Dauerbremskraft wandelt, welche an zwei Bremsbacken übertragen wird.

Die GB 469,911 A, die DE 1 903 560 A und die FR 2 212 888 zeigen Nachstellmechanismen für Trommelbremsen, wobei der jeweilige Nachstellmechanismus entweder manuell betätigt wird, oder selbsttätig durch die an einem Bremssystem angelegte Betätigungskraft angeregt wird.

Aufgabe der vorliegenden Erfindung ist es, eine Stelleinheit bereitzustellen, welche die Nachteile des Stands der Technik beseitigt und dabei insbesondere in bereits existierende Bremssysteme integriert oder nachgerüstet werden kann.

Diese Aufgabe wird gelöst mit einer Stelleinheit gemäß Anspruch 1. Weitere Vorteile und Merkmale der Erfindung ergeben sich aus den abhängigen Ansprüchen. Erfindungsgemäß umfasst die Stelleinheit eine Hülse, ein Druckelement und eine Krafteinheit, wobei die Hülse eine Bohrung mit einem Innengewinde aufweist, wobei das Druckelement einen Schaft mit einem Außengewinde aufweist, welches mit dem Innengewinde der Hülse in Eingriff steht oder bringbar ist, wobei die Hülse einen äußeren Eingriffsbereich aufweist, der mit einem Kraftübertragungselement der Krafteinheit in Eingriff steht oder bringbar ist, wobei die Hülse drehbar um eine erste Achse relativ zum Druckelement angeordnet ist, wobei eine Verdrehung des Druckelements relativ zur Hülse um die erste Achse eine Verlagerung des Druckelements relativ zur Hülse längs der ersten Achse bewirkt, wobei die Krafteinheit in einem Betätigungsmodus ein um eine zweite Achse wirkendes Drehmoment aufbringt, welches über das Kraftübertragungselement derart an die Hülse übertragen wird, dass eine Verdrehung der Hülse relativ zum Druckelement verursacht ist, wobei die erste Achse quer zur zweiten Achse steht. Die Hülse ist dabei Teil des Druckkolbens einer Trommelbremse und ist drehbar um die erste Achse innerhalb des Gehäuses der Betätigungseinheit der Bremse angeordnet. Die Betätigungseinheit ist eine Spreizkeileinheit. Vorzugsweise ist weiterhin das Druckelement mit seinem Schaft und dessen Außengewinde in die Hülse und deren Innengewinde eingeschraubt, wobei eine Verdrehung der Hülse relativ zum Druckelement eine Verlagerungsbewegung der Hülse relativ zum Druckelement längs oder parallel zur ersten Achse versursacht. Das Druckelement ist dabei vorzugsweise der Druckstempel einer Trommelbremse, welcher über einen Eingriff mit dem Bremsbackenelement gegen Verdrehung um die erste Achse gesichert ist. Das Kraftübertragungselement der Krafteinheit ist vorzugsweise als Welle ausgebildet, wobei an dem benachbart zum äußeren Eingriffsbereich der Hülse angeordneten Ende der Welle eine Eingriffsgeometrie vorgesehen ist, welche eine kraft- und/oder formschlüssige Kraftübertragung vom Kraftübertragungselement zur Hülse ermöglichst. Der kraft- und/oder formschlüssige Eingriff zwischen dem Kraftübertragungselement und der Hülse kann dabei vorzugsweise über eine Verzahnung stattfinden. Mit Vorteil ist das Kraftübertragungselement dabei rotationssymmetrisch oder drehbar um eine zweite Achse angeordnet, wobei die zweite Achse sich im Wesentlichen quer zur ersten Achse erstreckt. Auf diese Weise kann das Kraftübertragungselement seitlich zur Verlagerungsrichtung der Betätigungskolben der Trommelbremse aus dem Gehäuse der Trommelbremse herausgeführt werden und es kann eine besonders kompakte Bauweise des gesamten Bremssystems erreicht werden. Weiterhin bevorzugt ist dank des seitlichen bzw. zur ersten Achse queren Eingriffes der Krafteinheit die Betätigungseinheit für die Trommelbremse in ihrer Funktionsweise nicht beeinträchtigt, da entlang der ersten Achse die jeweiligen Bremskräfte aufgebracht und übertragen werden, wobei in dieser Richtung keine störenden Geometrien der Krafteinheit in das Bremssystem eingefügt werden müssen. Darüber hinaus hat es sich gezeigt, dass seitlich in das Gehäuse der Betätigungseinheit eingeführte Nachstell- und Rückstelleinheiten besonders gut von der Innenseite der Radaufhängung her zu erreichen sind, so dass eine Rückstellung des Bremssystems, insbesondere ohne Demontage der Bremstrommel und der Räder des Nutzfahrzeugs, erfolgen kann. Der Betätigungsmodus der Krafteinheit ist dadurch gekennzeichnet, dass die Krafteinheit in diesem Modus ein Drehmoment um die zweite Achse aufbringt. Dieses Drehmoment kann dabei insbesondere in Form einer rotierenden Bewegung des Kraftübertragungselements, oder in Form der Verhinderung einer rotierenden Bewegung des Kraftübertragungselements vorliegen. Für den Fall, dass die Krafteinheit eine rotierende Bewegung des Kraftübertragungselements erzeugt, wird diese im Eingriffsbereich des Kraftübertragungselements mit dem äußeren Eingriffsbereich der Hülse in eine drehende Bewegung der Hülse um die erste Achse gewandelt. Dies kann beispielsweise in Form eines Schneckenradantriebs oder in Form eines Schraubenradgetriebes erfolgen. Für den Fall, dass dem Betätigungsmodus die Krafteinheit eine Verdrehung des Kraftübertragungselements blockiert, findet eine Verdrehung der Hülse nur dann statt, wenn die Bremse betätigt wird und somit eine Verlagerungsbewegung der Hülse längs bzw. parallel zur ersten Achse stattfindet, wobei durch den Eingriff zwischen Hülse und Kraftübertragungselement im äußeren Eingriffsbereich der Hülse, beispielsweise durch eine Schrägverzahnung, die Longitudinalbewegung der Hülse längs der ersten Achse zumindest teilweise in eine Drehbewegung der Hülse um die erste Achse gewandelt wird. Hierbei ist es erforderlich, dass das Kraftübertragungselement gegen Verlagerung längs der ersten Achse und somit quer zur zweiten Achse gesichert ist.

Mit Vorteil ist die Krafteinheit elektrisch betrieben. Das bedeutet insbesondere, dass die von der Krafteinheit erzeugte Kraft, welche entweder ein Drehmoment in Form einer rotierenden Bewegung oder ein Drehmoment in Form der Verhinderung der rotierenden Bewegung erreicht, durch elektrischen Strom verursacht ist. Der Vorteil einer elektrischen Betätigung der Krafteinheit liegt darin, dass die Krafteinheit unabhängig vom Betätigungszustand der Trommelbremse, insbesondere der Spreizkeileinheit, in den Betätigungsmodus versetzt werden kann oder der Betätigungsmodus beendet werden kann. Dies führt insbesondere dazu, dass unabhängig von der Verlagerungsrichtung der Hülse die Krafteinheit in den Betätigungsmodus versetzt werden kann. Auf diese Weise ist mit ein und demselben System gleichzeitig eine Nachstellung sowie eine Rückstellung möglich, da jeweils nur der entsprechende Zeitpunkt, in welchem der Betätigungsmodus der Krafteinheit aktiviert wird, ausgewählt werden muss. Weiterhin hat es sich als vorteilhaft herausgestellt, dass die elektrisch betriebene Krafteinheit wesentlich leichter ausgebildet ist und wesentlich weniger empfindliche Einzelteile aufweist als die bisher aus dem Stand der Technik bekannten rein mechanisch angesteuerten und angetriebenen Nach- und Rückstellsysteme. Da in aktuellen Baureihen von Nutzfahrzeugen ohnehin eine Vielzahl von elektrischen Systemen im Bereich der Radaufhängung vorhanden sind, kann auf diese Weise ohne großen Zusatzaufwand auch die elektrisch angetriebene Krafteinheit mit Energie versorgt werden.

Mit Vorteil ist der formschlüssige Eingriff zwischen dem äußeren Eingriffsbereich der Hülse und dem Kraftübertragungselement als Schraubgetriebe ausgebildet. Als Schraubgetriebe wird ein Getriebe bezeichnet, welches eines um eine erste Achse wirkendes Drehmoment in ein um eine zweite Achse wirkendes Drehmoment und umgekehrt wandelt. Dabei stehen die Achsen vorzugsweise quer zueinander. Es kann auf diese Weise erreicht werden, dass längs der Betätigungs- und somit Hauptkraftrichtung der Hülse und des Druckelements nicht gleichzeitig auch die für die Nach- bzw. Rückstellung erforderlichen Kräfte aufgebracht und in das System eingebracht werden müssen. Vielmehr kann die Krafteinheit seitlich am Gehäuse der Betätigungseinheit der Trommelbremse angeordnet und festgelegt sein, wobei das Kraftübertragungselement in das Gehäuse hineinragt und das entsprechende Drehmoment an die Hülse überträgt. Als Schraubgetriebe werden insbesondere zylindrische Schrägverzahnungen und Schneckenradantriebe bezeichnet.

Bevorzugt stehen die erste Achse und die zweite Achse windschief zueinander. Dies bedeutet, dass die erste Achse und die zweite Achse nicht parallel zueinander ausgerichtet sind und kein Schnittpunkt zwischen den Achsen existiert. Der Vorteil dieser geometrischen Ausgestaltung der Stelleinheit ist, dass ein höherer Freiheitsgrad bei der Auslegung der Stelleinheit vorhanden ist. So ist es insbesondere möglich, die zweite Achse schräg in Bezug auf die erste Achse in das Gehäuse der Betätigungseinheit der Trommelbremse hineinragen zu lassen, um am Bremssystem existierende Bauraumverhältnisse besser ausnutzen zu können. Dank des Einsatzes eines Schraubgetriebes ist es dabei möglich, dass, auch wenn die in eine Ebene projizierten der ersten und der zweiten Achse nicht senkrecht zueinander stehen, der Eingriff über die Anpassung der Winkel, beispielsweise der Schrägverzahnungswinkel, entsprechend anzupassen.

Mit Vorteil ist der äußere Eingriffsbereich der Hülse zylinderförmig um die erste Achse ausgebildet, wobei vorzugsweise der Radius des äußeren Eingriffsbereichs parallel zum kleinsten Abstand zwischen der ersten Achse und der zweiten Achse verläuft. Mit anderen Worten greift das Kraftübertragungselement somit exakt mit dem Hebelarm des Radius des äußeren Eingriffsbereichs der Hülse an dieser ein, wobei der Radius des äußeren Eingriffsbereichs im Wesentlichen die Strecke kleinster Länge zwischen der ersten und der zweiten, vorzugsweise windschief zueinander stehenden, Achse ist. Bevorzugt steht der kleinste Abstand zwischen der ersten und der zweiten Achse dabei kollinear zum Radius des äußeren Eingriffsbereichs, wodurch besonders hohe Drehmomente zwischen dem Kraftübertragungselement und dem äußeren Eingriffsbereich der Hülse übertragbar sind.

In einer bevorzugten Ausführungsform ist die Krafteinheit ein Elektromotor, welcher im Betätigungsmodus ein Drehmoment um die zweite Achse erzeugt, wobei das Kraftübertragungselement ein Schneckengetriebe umfasst, welches in den äußeren Eingriffsbereich eingreift und eine Rotation der Hülse um die erste Achse relativ zum Druckelement bewirkt. Der Vorteil des Elektromotors ist, dass dieser unabhängig von der Betätigung der Trommelbremse in Gang gesetzt werden kann, wobei hierdurch der Betätigungsmodus der Krafteinheit unabhängig vom Betätigungszustand der Trommelbremse ist. Dabei kann darüber hinaus durch die Auslegung des Schneckenradantriebs mit einer nur sehr geringen Steigung auch mit einem relativ schwachen Elektromotor ein sehr großes Drehmoment an der Hülse erzeugt werden. Weiterhin ist mit Vorteil ein Schneckenradantrieb sehr kompakt ausgebildet, da die Schnecke selbst nur sehr geringe Abmessungen aufweist und auch die entsprechende Ausbildung des äußeren Eingriffsbereichs an der Hülse sehr einfach zu gestalten ist. Ein weiterer Vorteil der Verwendung eines Elektromotors als Krafteinheit ist, dass durch Änderung der Polung der Versorgungsspannung des Elektromotors auf einfache Weise die Drehrichtung des Motors geändert werden kann, wodurch durch sowohl eine Nachstellung der Trommelbremse als auch eine Rückstellung, insbesondere nach dem Auswechseln abgenutzter Belagelemente, durchgeführt werden kann. Im Gegensatz zu den bisher aus dem Stand der Technik bekannten mechanisch betätigten Rückstellmechanismen muss der Monteur hierbei auch nicht mit einem Werkzeugs in schwer erreichbare Bereiche der Trommelbremse vordringen, sondern es reicht das einfache Anlegen einer Versorgungsspannung für den Elektromotor bzw. ein einfacher Knopfdruck im Steuerungsgerät des Elektromotors, um eine Rückstellung der Trommelbremse auf besonders einfache Weise zu erreichen.

Mit Vorteil weist der äußere Eingriffsbereich der Hülse eine Geradverzahnung auf, wobei die Verzahnung derart parallel zur ersten Achse ausgebildet, dass eine Verlagerung der Hülse relativ zum Kraftübertragungselement keine Rotation der Hülse um die erste Achse bewirkt. Mit anderen Worten ist der äußere Eingriffsbereich dabei als Verzahnung ausgebildet, wobei sich die Zähne im Wesentlichen mit konstantem Querschnitt parallel zur ersten Achse erstrecken. Auf diese Weise kann zwar ein nur punktförmiger Eingriff eines Schneckenrads in den äußeren Eingriffsbereich erfolgen. Eine Verlagerungsbewegung der Hülse parallel zur ersten Achse relativ zum Kraftübertragungselement kann dabei aber ohne größere Reibungsverluste stattfinden, wobei das mit einer Antriebsschnecke ausgestattete Kraftübertragungselement in dem Fall, dass der Elektromotor nicht aktiviert ist, sogar eine Verdrehung der Hülse um die erste Achse verhindern kann. Eine Geradverzahnung an der Hülse ist darüber hinaus besonders einfach herzustellen, da durch einfaches Längsfräsen oder Räumen die entsprechenden Zähne an dem äußeren Eingriffsbereich der Hülse erzeugt werden können.

Mit Vorteil liegt der Steigungswinkel des Schneckentriebs zwischen 2° und 20°, vorzugsweise zwischen 5° und 20° und besonders bevorzugt bei circa 10° bis 15°. Es ist von Vorteil, wenn der Steigungswinkel des Schneckentriebs möglichst gering gehalten wird, um bei einer großen Motordrehzahl und somit nur geringen vom Motor aufzubringenden Drehmomenten gleichzeitig ein großes an der Hülse zu erzeugendes Drehmoment zu bewirken. Es hat sich dabei gezeigt, dass in einem Bereich von 1° bis 20° für sämtliche der im Rahmen der vorliegenden Erfindung getesteten Anwendungen jeweils der richtige Schneckentrieb ausgewählt werden konnte, um in entsprechenden, möglichst kleinbauenden Elektromotoren trotzdem ausreichende Drehmomente für eine Nachstellung und eine Rückstellung des Bremssystems des Nutzfahrzeugs aufbringen zu können.

In einer weiteren bevorzugten Ausführungsform ist im Betätigungsmodus eine Rotation des Kraftübertragungselements verhindert, wobei das Kraftübertragungselement und der äußere Eingriffsbereich der Hülse über eine Schrägverzahnung derart in Eingriff stehen, dass eine Verlagerung der Hülse relativ zum Kraftübertragungselement und längs der ersten Achse eine Rotation der Hülse um die erste Achse bewirkt. Insbesondere mit dem Ziel, die Krafteinheit noch einfacher und mit noch weniger relativ zueinander bewegten Teilen auszubilden, kann diese als einfacher Blockiermechanismus ausgebildet sein, welcher im Betätigungsmodus der Krafteinheit eine Rotation des Kraftübertragungselements um die zweite Achse verhindert. Indem gleichzeitig das Kraftübertragungselement und der äußere Eingriffsbereich der Hülse über eine Schrägverzahnung miteinander in Eingriff stehen, führt somit eine Längsverlagerung der Hülse ohne gleichzeitig Möglichkeit der Verdrehung des Kraftübertragungselements zwangsläufig zu einer Rotation der Hülse in Form eine Schraubbewegung um die erste Achse. Dabei kann je nachdem, ob das Kraftübertragungselement während des Betätigens der Bremse oder während der Rückwärtsbewegung der Hülse beim Entspannvorgang der Bremse gegen Verdrehung gesichert ist, eine Nachstellung oder eine Rückstellung der Bremse erreicht werden. Das Kraftübertragungselement ist somit notwendigerweise gegen Verlagerung längs oder parallel zur ersten Achse gesichert.

Mit Vorteil umfasst die Krafteinheit einen Kupplungsmechanismus, der im Betätigungsmodus einen Form- oder Kraftschluss zwischen einem Stator und dem Kraftübertragungselement herstellt, wobei der Stator am Gehäuse der Betätigungseinheit der Trommelbremse festgelegt ist. Mit Vorteil weisen also das Kraftübertragungselement und ein am Gehäuse festgelegter Stator jeweils eine Eingriffsgeometrie auf, welche im Betätigungsmodus der Krafteinheit jeweils gegeneinander gedrückt oder gehalten sind derart, dass eine Rotation des Kraftübertragungselements relativ zum Stator verhindert ist. So kann beispielsweise eine einfache Reibfläche vorhanden sein, welche einen Kraftschluss zwischen dem Kraftübertragungselement und dem Stator herstellt, wobei eine solche Reibfläche mit Vorteil sehr einfach herzustellen ist. Alternativ kann am Stator und am Kraftübertragungselement auch eine zahnartige Eingriffsstruktur vorgesehen sein, welche sowohl einen Kraft- als auch einen Formschluss zwischen den beiden Bauteilen herstellt. Der Vorteil der Verwendung einer Kupplung anstelle eines Elektromotors ist, dass zur Betätigung der Kupplung und zum Ineingriffbringen des Kraftübertragungselements mit dem Stator eine nur sehr geringe Kraft erforderlich ist, während die auf die Hülse wirkende Stellkraft im Wesentlichen durch die Betätigung der Bremse aufgebracht wird. Im Falle einer bevorzugen Spreizkeiltrommelbremse wird also durch das Einfahren des Spreizkeils zwischen den Kolbenelementen, welche jeweils eine Hülse umfassen, eine Kraft auf den Verbund aus Hülse und Kraftübertragungselement ausgeübt, welche zur Rotation der Hülse um die erste Achse führt. Die von der als Kupplung ausgebildeten Krafteinheit erzeugte Haltekraft am Kraftübertragungselement ist dabei mit Vorteil höher als die zur Betätigung der Kupplung erforderliche Stellkraft. Es kann daher die Krafteinheit besonders klein und leicht dimensioniert werden und trotzdem die für die Nachstellung der Bremse erforderlichen hohen Stellkräfte aufgebracht werden.

Mit Vorteil umfasst der Kupplungsmechanismus eine Spulenanordnung, welche am Stator festgelegt ist, wobei das im Betätigungsmodus von der Spulenanordnung erzeugte elektromagnetische Feld das Kraftübertragungselement längs der zweiten Achse verlagert derart, dass eine Haltegeometrie des Kraftübertragungselements mit einer Haltegeometrie des Stators in Eingriff gelangt. Mit anderen Worten ist der Kupplungsmechanismus somit elektrisch angetrieben. Die Spulenanordnung ist vorzugsweise derart am Stator angeordnet, dass bei Anlegen einer Spannung und dem Durchfließen der Spulenanordnung mit elektrischem Strom ein elektromagnetisches Feld erzeugt wird, welches die am Kraftübertragungselement vorgesehene Haltegeometrie derart anzieht, dass diese mit einer Haltegeometrie am Stator in Eingriff gelangt, wodurch ein Verdrehen des Kraftübertragungselements relativ zum Stator verhindert ist. Zur Herstellung dieses Kupplungsmechanismus werden mit Vorteil nur sehr wenige Bauteile gebraucht. Darüber hinaus ist die Integration des Kupplungsmechanismus in bereits existierende Bremsbackengehäuse oder Betätigungsgehäuse sehr einfach. Insbesondere benötigt der Kupplungsmechanismus nur einen sehr geringen Bauraum, wobei die einzigen relativ zueinander bewegten Bauteile das Kraftübertragungselement und der Stator sind.

Besonders bevorzugt sind dabei die Haltegeometrien zur Ausbildung eines gegen Rotation um die zweite Achse wirkenden Formschlusses ausgelegt. Auf diese Weise kann durch eine nur sehr geringe, an der Kupplung erforderliche elektromagnetische Kraft ein relativ hohes Drehmoment zwischen dem Stator und dem Kraftübertragungselement übertragen werden.

Weiterhin bevorzugt weist das Kraftübertragungselement einen Magneten auf. Insbesondere für den Fall, dass das Herstellungsmaterial des Kraftübertragungselements kein Eisenwerkstoff ist und somit nicht durch das elektromagnetische Feld angezogen ist, ist es von Vorteil, am Kraftübertragungselement, insbesondere an dem Ende des Kraftübertragungselements, welches in die Krafteinheit eingreift, einen Magneten vorzusehen. Auf diese Weise können die Stellkräfte des Kupplungselements nochmals erhöht werden, wobei eine geringere elektrische Leistung an der Spuleneinheit erforderlich ist.

Mit Vorteil ist ein Rückstellmittel vorgesehen, welches das Kraftübertragungselement außer Eingriff mit dem Stator zu bringen sucht. Um nach dem Ausschalten der elektrischen Stromversorgung für die Kupplungsanordnung das Lösen der Kupplung und das Außereingriffbringen des Kraftübertragungselements mit dem Stator zu erreichen, ist vorzugsweise ein Rückstellmittel vorgesehen, welches die Haltegeometrie des Kraftübertragungselements und die Haltegeometrie des Stators wieder voneinander trennt. Das Rückstellmittel ist dabei bevorzugt eine Feder bzw. ein Federelement, welches somit ohne das Aufbringen einer elektrischen Leistung das Kraftübertragungselement außer Eingriff mit dem Stator bringt. Es versteht sich hierbei, dass die Rückstellkraft des Federelements durch die Spulenanordnung zur Erreichung des Betätigungsmodus überwunden werden muss. Daher wird bevorzugt lediglich ein relativ dünnes bzw. schwaches Rückstellmittel verwendet. Alternativ könnte auch Luftdruck als Rückstellmittel im Sinne der vorliegenden Erfindung angewandt werden. Hierfür könnte der Raum zwischen den Haltegeometrien als Druckraum ausgelegt sein, wobei ein Leitungselement vorgesehen ist, welches das Einströmen von Druckluft in den Raum zwischen den Haltegeometrien ermöglicht und so eine Trennung des Kraftübertragungselements vom Stator erlaubt.

Mit Vorteil liegt der Schrägungswinkel der Schrägverzahnung im Bereich von 30° bis 60°, vorzugsweise 40° bis 50°. Es hat sich gezeigt, dass bei diesem Winkel eine gleichmäßige Kraftübertragung, Drehmomentübertragung für eine Nachstellung und Rückstellung der Bremseinheit möglich wird. Gleichzeitig ist, wenn die Krafteinheit sich nicht im Betätigungsmodus befindet der durch die Schrägverzahnung erzeugte Widerstand beim Betätigen der Bremse relativ gering, so dass deren Funktionsweise mit Vorteil nicht beeinträchtigt wird.

Mit Vorteil sind die Hülse und die Krafteinheit überwiegend im Inneren eines einstückigen Gehäuses angeordnet. Der Vorteil der erfindungsgemäßen Stelleinheit ist, dass diese in ein existierendes Gehäuse einer Spreizkeileinheit für eine Spreizkeiltrommelbremse eingebaut werden kann. Dabei sind vorzugsweise die Hülse und die Krafteinheit überwiegend, d.h. zu mehr als 70% ihrer Gesamterstreckung innerhalb des vom Gehäuse aufgespannten Raumes angeordnet. Der Vorteil dieser Anordnung ist, dass die Stelleinheit wesentlich gegen Fremdkörpereinflüsse geschützt ist. Weiterhin bevorzugt ist auf diese Weise eine besonders hohe Stabilität der Stelleinheit erreichbar, da sämtliche Bauteile innerhalb des einstückig ausgebildeten Gehäuses festgelegt und somit zueinander in exakter Position gehalten sind.

Weitere Vorteile und Merkmale der vorliegenden Erfindung ergeben sich aus der nachfolgenden Beschreibung mit Bezug auf die beigefügten Figuren. Es versteht sich, dass einzelne, nur in einer der Ausführungsformen gezeigte Merkmale auch in Ausführungsformen anderer Figuren Anwendung finden können, sofern dies nicht explizit ausgeschlossen wurde oder sich aufgrund technischer Gegebenheiten verbietet.

Es zeigen:
- Fig. 1: eine bereichsweise geschnittene Ansicht einer ersten Ausführungsform der erfindungsgemäßen Stelleinheit,
- Fig. 2: eine teilweise geschnittene Ansicht einer zweiten Ausführungsform der erfindungsgemäßen Stelleinheit, und
- Fig. 3: eine teilweise geschnittene Ansicht einer Stelleinheit mit Blick entlang der zweiten Achse.

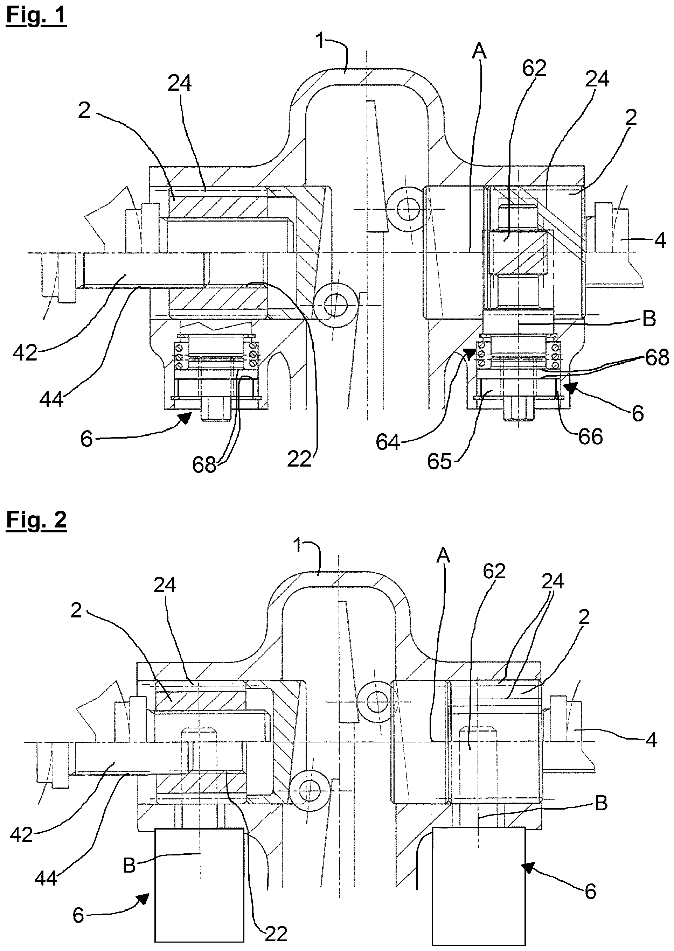

Fig. 1 zeigt eine schematische Schnittansicht durch eine Spreizkeileinheit einer Trommelbremse, an welcher zwei Stelleinheiten in bevorzugter Ausführungsform angeordnet sind. Das Gehäuse 1 der Spreizkeileinheit weist dabei zwei im Wesentlichen horizontal verlaufende Bohrungen auf, in welchen die Hülsen 2 längs der ersten Achse A verschiebbar und gegen Verlagerung quer zur ersten Achse A gesichert angeordnet sind. Im Inneren der Spreizkeileinheit ist ein Spreizkeil in zwei Verlagerungspositionen gezeigt. Dabei ist die rechte Hälfte des dargestellten Spreizkeils in der Betätigungsposition, d.h. im Zustand, im dem die Bremse betätigt wird, und die linke Hälfte des dargestellten Spreizkeils in der ausgefahrenen Position, bei welcher die Bremse nicht betätigt wird, gezeigt. In die Hülsen 2 eingeschraubt ist jeweils ein Druckelement 4, wobei das Druckelement ebenfalls in zwei Positionen dargestellt ist. So zeigt insbesondere in der linken Hälfte von Fig. 1 die obere Hälfte ein Druckelement 4 im eingeschraubten bzw. zurückgestellten Zustand und die untere Hälfte das Druckelement 4 im nahezu maximal ausgefahrenen, also nachgestellten Zustand. Zwischen den Hülsen 2 und den vom Spreizkeil mit einer Stellkraft beaufschlagten Wälzkörpern ist jeweils ein Kolbenelement dargestellt, welches eine im Wesentlichen horizontal bzw. parallel zur ersten Achse A wirkende Betätigungskraft der Bremse auf die Hülsen 2 überträgt. In das Gehäuse 1 eingebracht sind weiterhin zwei Krafteinheiten 6, welche einen Kupplungsmechanismus 64 umfassen. Mit Vorteil ist jede Krafteinheit 6 in eine im Wesentlichen rotationssymmetrisch um eine zweite Achse B verlaufende Bohrung im Gehäuse 1 der Spreizkeileinheit angeordnet. Die Krafteinheit 6 weist ein Kraftübertragungselement 62 auf, welches sich vorzugsweise im Wesentlichen längs oder parallel zur zweiten Achse B erstreckt. Das Kraftübertragungselement weist einen Eingriffsabschnitt auf, an dem vorzugsweise eine Schrägverzahnung vorgesehen ist, welche in eine korrespondierend vorgesehene Schrägverzahnung am äußeren Eingriffsbereich 24 der Hülse 2 eingreift. Das in der rechten Hälfte von Fig. 1 gezeigte Kraftübertragungselement 62 ist dabei nicht geschnitten, weshalb hier die vom äußeren Eingriffsabschnitt 24 abgewandte Seite der Schrägverzahnung zu sehen ist. Der Kupplungsmechanismus 64 der jeweiligen Krafteinheit 6 weist eine Spulenanordnung 65 auf, welche bei Anlegen einer Spannung und einem Stromfluss in der Spule ein elektromagnetisches Feld erzeugt, welches wiederum das Kraftübertragungselement 62 selbst, oder ein gegen Rotation um die zweite Achse B am Kraftübertragungselement 62 festgelegtes Element, gegen einen Stator 66 presst derart, dass eine Rotation des Kraftübertragungselements 62 relativ zum Stator 66 um die zweite Achse B verhindert ist. Dieser Zustand wird als Betätigungsmodus der Krafteinheit 6 bezeichnet. Im Betätigungsmodus der Krafteinheit 6, in welchem das Kraftübertragungselement 62 nicht um die zweite Achse rotieren kann, führt eine Längsverschiebung der Hülse 2 relativ zum Kraftübertragungselement 62 längs der ersten Achse A durch den Eingriff der Schrägverzahnungen am äußeren Eingriffsbereich 24 der Hülse 2 und am Kraftübertragungselement 62 zu einer Rotation der Hülse 2 um die erste Achse A. Durch diese Rotation der Hülse 2 relativ zum Druckelement 4 schraubt sich das Druckelement 4 über das an seinem Schaft 42 vorgesehen Außengewinde 44 aus der Hülse 2 heraus oder in die Hülse 2 hinein. Auf diese Weise wird die Länge des Verbunds aus Hülse 2 und Druckelement 4 verändert. Dieser Effekt kann zur Nachstellung (Herausschrauben des Druckelements 4 aus der Hülse 2) oder zur Rückstellung (Hineinschrauben des Druckelements 4 in die Hülse 2) verwendet werden. Entscheidend hierbei ist, dass eine Nachstellung oder Rückstellung nur während der Betätigung der Bremse, d.h. während der Spreizkeil in die Spreizkeileinheit ein- oder aus dieser herausfährt, vorgenommen wird. Es ist weiterhin schematisch angedeutet, dass das Druckelement 4 an seiner aus dem Gehäuse 1 herausragenden Seite jeweils einen Abschnitt aufweist, an welchem es durch den Steg einer Bremsbacke gegen Verdrehung um die erste Achse A gesichert ist. Weiterhin ist dargestellt, dass die jeweilige Krafteinheit 6 an der in der Figur unten gezeigten Außenseite zusätzlich einen Eingriffsabschnitt zur manuellen Rückstellung oder Nachstellung aufweist. Dieser ist insbesondere mit einer Außensechskantgeometrie ausgestattet, um ein entsprechendes Werkzeug an die Krafteinheit 6 ansetzen zu können und ein Drehmoment an das Kraftübertragungselement 62 zu übertragen. Es kann auf diese Weise auch bei einem Ausfall der Elektrik des Nutzfahrzeugs eine Rückstellung oder Nachstellung der Bremse durch einen Monteur vorgenommen werden. In der in Fig. 1 gezeigten Draufsicht stehen die erste Achse A und die zweite Achse B im Wesentlichen senkrecht aufeinander. Räumlich betrachtet sind beide Achsen A, B aber windschief zueinander angeordnet, d.h. sie haben keinen Schnittpunkt miteinander. Bei der in Fig. 1 gezeigten bevorzugten Ausführungsform ist der kleinste Abstand zwischen den beiden Achsen A, B auch gleichzeitig die Summe der Radien der Hülse bzw. des äußeren Eingriffsbereichs der Hülse 24 und des Kraftübertragungselements 62 abzüglich der Tiefe, mit welcher die Verzahnungen ineinandergreifen. Als Haltegeometrie 68 werden die jeweils kraft- oder formschlüssig ineinander greifenden Bereiche am Stator 66 und am Kraftübertragungselement 62 bezeichnet. Im Falle eines rein kraftschlüssigen Eingriffs sind die Haltegeometrien 68 als einfache, im Wesentlichen plane Flächen ausgebildet, welche im Betätigungsmodus einen Reibschluss miteinander bilden. Alternativ bevorzugt weisen die Haltegeometrien 68 Vor- und Rücksprünge für einen formschlüssigen Eingriff auf.

Fig. 2 zeigt eine weitere bevorzugte Ausführungsform einer erfindungsgemäßen Stelleinheit. Dabei ist im Unterschied zu Fig. 1 die Krafteinheit 6 als Elektromotor ausgebildet, wobei das Kraftübertragungselement 62 von der rotierenden Welle angetrieben wird oder mit dieser einstückig ausgebildet ist. Das Kraftübertragungselement 62 weist eine als Schneckenrad ausgebildete Eingriffsgeometrie zum Eingriff mit dem äußeren Eingriffsbereich 24 der Hülse 2 aufweist. Der äußere Eingriffsbereich 24 der Hülse 2 ist dabei als Geradverzahnung ausgebildet, wobei sich die Zähne vorzugsweise parallel zur ersten Achse A erstrecken. Auf diese Weise kann eine Längsverschiebung der Hülse 2 parallel zur ersten Achse A erfolgen, ohne dass ein Drehmoment von der Hülse 2 auf das Kraftübertragungselement 62 oder umgekehrt übertragen wird. Eine Rotation der Hülse 2 um die erste Achse A, welche gleichzeitig zu einer Nach- oder Rückstellung führt, findet somit nur statt, wenn der Schneckentrieb des Kraftübertragungselements 2 rotiert wird. Für eine Nach- oder Rückstellung der Bremseinheit ist es somit lediglich erforderlich, dass der Elektromotor der Stelleinheit in Bewegung gesetzt wird. Die Rotationsrichtung des Elektromotors und somit die Rotationsrichtung des Kraftübertragungselements 62 bestimmt dabei, ob eine Nachstellung oder eine Rückstellung der Bremse erfolgt. Anstelle der Verwendung von zwei separaten Elektromotoren, wie in Fig. 2 gezeigt, könnte auch ein Übertragungselement wie eine Übertragungswelle zwischen den beiden Kraftübertragungselementen 62 angeordnet sein, welche das Drehmoment eines Elektromotors auf beide Kraftübertragungselemente 62 überträgt. Die Verwendung von zwei separaten Krafteinheiten 6 hat den Vorteil, dass nach unterschiedlich starkem Verschleiß, beispielsweise an der auflaufenden und der ablaufenden Bremsbacke, entsprechend unterschiedliche Nachstellung erfolgen kann. Bei einer mechanischen Kopplung der beiden Kraftübertragungselemente 62 kann dieser Vorteil zwar nicht genutzt werden, es ist aber ein geringerer Steuerungsaufwand erforderlich und es sind geringere Kosten für die Herstellung der Stelleinheit erforderlich, da der zweite Elektromotor eingespart werden kann.

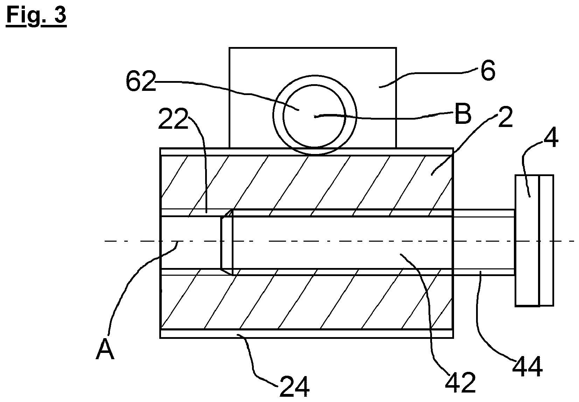

Fig. 3 zeigt eine Schnittansicht einer Stelleinheit mit Blickrichtung entlang der zweiten Achse B. Die Krafteinheit 6 weist einen Elektromotor und ein als Schneckenrad ausgebildetes Kraftübertragungselement 62 auf. Der äußere Eingriffsbereich 24 ist als Längsverzahnung ausgebildet, wobei die Zähne sich mit im Wesentlichen konstantem Querschnitt längs oder parallel der ersten Achse A erstrecken. Im Betätigungsmodus der Krafteinheit 6 rotiert das Kraftübertragungselement 62 um die zweite Achse B, wobei das Schneckenrad im äußeren Eingriffsbereich 24 der Hülse 2 eingreift, um ein um die erste Achse A wirkendes Drehmoment an der Hülse 2 zu erzeugen. Mit Vorteil kann die in Fig. 3 gezeigte Stelleinheit in der in Fig. 2 gezeigten Spreizkeileinheit eingesetzt werden.

### Bezugszeichenliste:

- 1: - Gehäuse
- 2: - Hülse
- 4: - Druckübertragungselement
- 6: - Krafteinheit
- 22: - Innengewinde
- 24: - äußerer Eingriffsbereich
- 42: - Schaft
- 44: - Außengewinde
- 62: - Kraftübertragungselement
- 64: - Kupplungsmechanismus
- 65: - Spulenanordnung
- 66: - Stator
- 68: - Haltegeometrie
- A: - erste Achse
- B: - zweite Achse

## Patentansprüche

1. Stelleinheit, zum Einsatz in einer Trommelbremse,
aufweisend eine Hülse (2), ein Druckelement (4) und eine Krafteinheit (6),
wobei die Hülse (2) eine Bohrung mit einem Innengewinde (22) aufweist,
wobei das Druckelement (4) einen Schaft (42) mit einem Außengewinde (44) aufweist welches mit dem Innengewinde (22) der Hülse (2) in Eingriff bringbar ist,
wobei die Hülse (2) einen äußeren Eingriffsbereich (24) aufweist, der mit einem Kraftübertragungselement (62) der Krafteinheit (6) in Eingriff bringbar ist,
wobei die Hülse (2) drehbar um eine erste Achse (A) relativ zum Druckelement (4) angeordnet ist,
wobei eine Verdrehung des Druckelements (4) relativ zur Hülse (2) um die erste Achse (A) eine Verlagerung des Druckelements (4) relativ zur Hülse (2) längs der ersten Achse (A) bewirkt,
wobei in einem Betätigungsmodus der Krafteinheit (6) das Kraftübertragungselement (62) ein um eine zweite Achse (B) wirkendes Drehmoment auf die Hülse (2) derart überträgt, dass eine Verdrehung der Hülse (2) relativ zum Druckelement (4) verursacht ist,
wobei die erste Achse (A) quer zur zweiten Achse (B) steht,
**dadurch gekennzeichnet, dass** die Hülse (2) Teil des Druckkolbens einer Betätigungseinheit der Trommelbremse ist und drehbar um die erste Achse (A) innerhalb des Gehäuses (1) der Betätigungseinheit der Bremse angeordnet ist, wobei die Betätigungseinheit eine Spreizkeileinheit ist.

2. Stelleinheit nach Anspruch 1,
wobei die Krafteinheit (6) elektrisch betrieben ist.

3. Stelleinheit nach einem der vorhergehenden Ansprüche,
wobei der formschlüssige Eingriff zwischen dem äußeren Eingriffsbereich (24) und dem Kraftübertragungselement (62) als Schraubgetriebe ausgebildet ist.

4. Stelleinheit nach einem der vorhergehenden Ansprüche,
wobei die erste Achse (A) und die zweite Achse (B) windschief zu einander stehen.

5. Stelleinheit nach einem der vorhergehenden Ansprüche,
wobei der äußere Eingriffsbereich (24) zylinderförmig um die erste Achse (A) ausgebildet ist,
wobei der Radius des äußeren Eingriffsbereiches (24) vorzugsweise parallel zum kleinsten Abstand zwischen der ersten Achse (A) und der zweiten Achse (B) verläuft.

6. Stelleinheit nach einem der vorhergehenden Ansprüche,
wobei die Krafteinheit (6) ein Elektromotor ist, welcher im Betätigungsmodus ein Drehmoment um die zweite Achse (B) erzeugt,
wobei das Kraftübertragungselement (62) ein Schneckengetriebe umfasst, welches in den äußeren Eingriffsbereich (24) eingreift und eine Rotation der Hülse (2) um die erste Achse (A) relativ zum Druckelement (4) bewirkt.

7. Stelleinheit nach Anspruch 6,
wobei der äußere Eingriffsbereich (24) der Hülse (2) eine Geradverzahnung aufweist,
wobei die Verzahnung derart parallel zur ersten Achse (A) ausgebildet ist, dass eine Verlagerung der Hülse (2) relativ zum Kraftübertragungselement (62) keine Rotation der Hülse (2) um die erste Achse (A) bewirkt.

8. Stelleinheit nach einem Ansprüche 6 oder 7,
wobei der Steigungswinkel des Schneckentriebes zwischen 2° und 20°, vorzugsweise zwischen 5° und 20°, und besonders bevorzugt bei ca. 10° - 15° liegt.

9. Stelleinheit nach einem der Ansprüche 1 bis 5,
wobei im Betätigungsmodus eine Rotation des Kraftübertragungselements (62) verhindert ist,
wobei das Kraftübertragungselement (62) und der äußere Eingriffsbereich (24) der Hülse (2) über eine Schrägverzahnung derart in Eingriff stehen, dass eine Verlagerung der Hülse (2) relativ zum Kraftübertragungselement (62) längs der ersten Achse (A) eine Rotation der Hülse (2) um die erste Achse bewirkt.

10. Stelleinheit nach Anspruch 9,
wobei die Krafteinheit (6) einen Kupplungsmechanismus (64) umfasst, der im Betätigungsmodus einen Form- oder Kraftschluss zwischen einem Stator (66) und dem Kraftübertragungselement (62) herstellt,
wobei der Stator (66) am Gehäuse der Betätigungseinheit der Trommelbremse festgelegt ist.

11. Stelleinheit nach Anspruch 10,
wobei der Kupplungsmechanismus (64) eine Spulenanordnung (65) umfasst, welche am Stator (66) festgelegt ist,
wobei das im Betätigungsmodus von der Spulenanordnung erzeugte elektromagnetische Feld das Kraftübertragungselement (62) längs der zweiten Achse (B) verlagert, derart dass eine Haltegeometrie (68) des Kraftübertragungselements (62) mit einer Haltegeometrie (68) des Stators (66) in Eingriff gelangt.

12. Stelleinheit nach Anspruch 11,
wobei die Haltegeometrien (68) zur Ausbildung eines gegen Rotation um die zweite Achse (B) wirkenden Formschlusses ausgelegt sind.

13. Stelleinheit nach einem der Ansprüche 9 bis 12,
wobei das Kraftübertragungselement (62) einen Magneten aufweist.

14. Stelleinheit nach einem der Ansprüche 9 bis 13,
wobei ein Rückstellmittel vorgesehen ist, welches das Kraftübertragungselement (62) außer Eingriff mit dem Stator (66) zu bringen sucht.

15. Stelleinheit nach einem der vorhergehenden Ansprüche,
wobei die Hülse (2) und die Krafteinheit (6) überwiegend im Inneren des Gehäuses (1) angeordnet sind,
wobei das Gehäuse (1) einstückig ausgebildet ist.

## Claims

1. Actuating unit for use in a drum brake,
having a sleeve (2), a pressure element (4) and a force unit (6), the sleeve (2) having a bore with an internal thread (22), the pressure element (4) having a shank (42) with an external thread (44) which can be brought into engagement with the internal thread (22) of the sleeve (2), the sleeve (2) having an outer engagement region (24) which can be brought into engagement with a force transmission element (62) of the force unit (6), the sleeve (2) being arranged such that it can be rotated about a first axis (A) relative to the pressure element (4), a rotation of the pressure element (4) relative to the sleeve (2) about the first axis (A) bringing about a movement of the pressure element (4) relative to the sleeve (2) along the first axis (A), the force transmission element (62) transmitting, in an actuating mode of the force unit (6), a torque which acts about a second axis (B) to the sleeve (2) in such a way that a rotation of the sleeve (2) relative to the pressure element (4) is caused, the first axis (A) lying transversely with respect to the second axis (B),
**characterized in that** the sleeve (2) is part of the pressure piston of an actuating unit of the drum brake, and is arranged within the housing (1) of the actuating unit of the brake such that it can be rotated about the first axis (A), the actuating unit being a spreading wedge unit.

2. Actuating unit according to Claim 1,
the force unit (6) being operated electrically.

3. Actuating unit according to either of the preceding claims,
the positively locking engagement between the outer engagement region (24) and the force transmission element (62) being configured as a helical gear mechanism.

4. Actuating unit according to one of the preceding claims,
the first axis (A) and the second axis (B) lying in a skewed manner with respect to one another.

5. Actuating unit according to one of the preceding claims,
the outer engagement region (24) being of cylindrical configuration around the first axis (A), the radius of the outer engagement region (24) preferably running parallel to the smallest spacing between the first axis (A) and the second axis (B).

6. Actuating unit according to one of the preceding claims,
the force unit (6) being an electric motor which generates a torque around the second axis (B) in the actuating mode, the force transmission element (62) comprising a worm gear mechanism which engages into the outer engagement region (24) and brings about a rotation of the sleeve (2) about the first axis (A) relative to the pressure element (4).

7. Actuating unit according to Claim 6,
the outer engagement region (24) of the sleeve (2) having a spur toothing system, the toothing system being configured parallel to the first axis (A) in such a way that a movement of the sleeve (2) relative to the force transmission element (62) does not bring about a rotation of the sleeve (2) about the first axis (A).

8. Actuating unit according to either of Claims 6 and 7,
the pitch angle of the worm drive lying between 2° and 20°, preferably between 5° and 20°, and particularly preferably at approximately from 10° to 15°.

9. Actuating unit according to one of Claims 1 to 5,
a rotation of the force transmission element (62) being prevented in the actuating mode, the force transmission element (62) and the outer engagement region (24) of the sleeve (2) being in engagement via a helical toothing system in such a way that a movement of the sleeve (2) relative to the force transmission element (62) along the first axis (A) brings about a rotation of the sleeve (2) about the first axis.

10. Actuating unit according to Claim 9,
the force unit (6) comprising a coupling mechanism (64) which, in the actuating mode, establishes a positively locking connection or non-positive connection between a stator (66) and the force transmission element (62), the stator (66) being fixed on the housing of the actuating unit of the drum brake.

11. Actuating unit according to Claim 10,
the coupling mechanism (64) comprising a coil arrangement (65) which is fixed on the stator (66), the electromagnetic field which is generated by the coil arrangement in the actuating mode moving the force transmission element (62) along the second axis (B), in such a way that a holding geometry (68) of the force transmission element (62) comes into engagement with a holding geometry (68) of the stator (66).

12. Actuating unit according to Claim 11,
the holding geometries (68) being designed to configure a positively locking connection which acts against rotation about the second axis (B).

13. Actuating unit according to one of Claims 9 to 12,
the force transmission element (62) having a magnet.

14. Actuating unit according to one of Claims 9 to 13,
a restoring means being provided which attempts to move the force transmission element (62) out of engagement with the stator (66).

15. Actuating unit according to one of the preceding claims,
the sleeve (2) and the force unit (6) being arranged predominantly in the interior of the housing (1), the housing (1) being configured in one piece.

## Revendications

1. Unité de réglage pour frein à tambour,
comprenant un manchon (2), un élément de compression (4) et une unité de force (6),
dans laquelle
le manchon (2) présente un alésage pourvu d'un taraudage (22),
l'élément de compression (4) présente une tige (42) pourvue d'un filetage (44) qui peut être engagé avec le taraudage (22) du manchon (2),
le manchon (2) présente une zone d'engagement extérieure (24) qui peut s'engager avec un élément de transmission de force (62) de l'unité de force (6),
le manchon (2) est disposé de manière rotative autour d'un premier axe (A) par rapport à l'élément de compression (4),
une rotation de l'élément de compression (4) par rapport au manchon (2) autour du premier axe (A) provoque un déplacement de l'élément de compression (4) par rapport au manchon (2) le long du premier axe (A),
dans un mode d'actionnement de l'unité de force (6), l'élément de transmission de force (62) transmet au manchon (2) un couple de rotation agissant autour d'un second axe (B), de manière à provoquer une rotation du manchon (2) par rapport à l'élément de compression (4),
le premier axe (A) est transversal au second axe (B),
**caractérisé en ce que**
le manchon (2) fait partie du piston de pression d'une unité d'actionnement du frein à tambour et est disposé de manière rotative autour du premier axe (A) à l'intérieur du boîtier (1) de l'unité d'actionnement du frein, l'unité d'actionnement étant une unité à cale d'écartement.

2. Unité de réglage selon la revendication 1,
dans laquelle
l'unité de force (6) fonctionne par voie électrique.

3. Unité de réglage selon l'une des revendications précédentes,
dans laquelle
l'engagement par coopération de forme entre la zone d'engagement extérieure (24) et l'élément de transmission de force (62) est réalisé sous forme d'engrenage à vis.

4. Unité de réglage selon l'une des revendications précédentes,
dans laquelle
le premier axe (A) et le second axe (B) sont inclinés l'un par rapport à l'autre.

5. Unité de réglage selon l'une des revendications précédentes,
dans laquelle
la zone d'engagement extérieure (24) est réalisée en forme de cylindre autour du premier axe (A), et
le rayon de la zone d'engagement extérieure (24) s'étend de préférence parallèlement à la plus petite distance entre le premier axe (A) et le second axe (B).

6. Unité de réglage selon l'une des revendications précédentes,
dans laquelle
l'unité de force (6) est un moteur électrique qui, en mode d'actionnement, génère un couple de rotation autour du second axe (B), et
l'élément de transmission de force (62) comprend un engrenage à vis sans fin qui s'engage dans la zone d'engagement extérieure (24) et qui provoque une rotation du manchon (2) autour du premier axe (A) par rapport à l'élément de compression (4).

7. Unité de réglage selon la revendication 6,
dans laquelle
la zone d'engagement extérieure (24) du manchon (2) présente une denture droite, et
la denture est réalisée parallèlement au premier axe (A), de telle sorte qu'un déplacement du manchon (2) par rapport à l'élément de transmission de force (62) ne provoque pas de rotation du manchon (2) autour du premier axe (A).

8. Unité de réglage selon l'une des revendications 6 ou 7,
dans laquelle
l'angle de pas de l'engrenage à vis sans fin est compris entre 2° et 20°, de préférence entre 5° et 20°, et est de manière particulièrement préférée d'environ 10° à 15°.

9. Unité de réglage selon l'une des revendications 1 à 5,
dans laquelle
en mode d'actionnement, une rotation de l'élément de transmission de force (62) est empêchée, et
l'élément de transmission de force (62) et la zone d'engagement extérieure (24) du manchon (2) sont en engagement mutuel par une denture hélicoïdale de telle sorte qu'un déplacement du manchon (2) par rapport à l'élément de transmission de force (62) le long du premier axe (A) provoque une rotation du manchon (2) autour du premier axe.

10. Unité de réglage selon la revendication 9,
dans laquelle
l'unité de force (6) comprend un mécanisme d'accouplement (64) qui, en mode d'actionnement, établit une coopération de forme ou de force entre un stator (66) et l'élément de transmission de force (62), et
le stator (66) est immobilisé sur le boîtier de l'unité d'actionnement du frein à tambour.

11. Unité de réglage selon la revendication 10,
dans laquelle
le mécanisme d'accouplement (64) comprend un ensemble à bobine (65) qui est immobilisé sur le stator (66), et
le champ électromagnétique généré par l'ensemble à bobine en mode d'actionnement déplace l'élément de transmission de force (62) le long du second axe (B), de telle sorte qu'une géométrie de retenue (68) de l'élément de transmission de force (62) vient en engagement avec une géométrie de retenue (68) du stator (66).

12. Unité de réglage selon la revendication 11,
dans laquelle
les géométries de retenue (68) sont conçues pour réaliser une coopération de forme agissant à l'encontre d'une rotation autour du second axe (B).

13. Unité de réglage selon l'une des revendications 9 à 12,
dans laquelle
l'élément de transmission de force (62) comprend un aimant.

14. Unité de réglage selon l'une des revendications 9 à 13,
dans laquelle
il est prévu un moyen de rappel qui tend à faire dégager l'élément de transmission de force (62) par rapport au stator (66).

15. Unité de réglage selon l'une des revendications précédentes,
dans laquelle
le manchon (2) et l'unité de force (6) sont disposés majoritairement dans l'intérieur du boîtier (1), et
le boîtier (1) est réalisé d'un seul tenant.
